# EUROPÄISCHE PATENTSCHRIFT

(11) **EP 3 058 640 B1**
(45) Veröffentlichungstag und Bekanntmachung des Hinweises auf die Patenterteilung: **22.07.2020**
(21) Anmeldenummer: 15712564.2
(22) Anmeldetag: 18.03.2015
(51) Int. Cl.: H02K 3/51

(54) **LÄUFERKAPPE FÜR ELEKTRISCHE GENERATOREN**
ROTOR CAP FOR ELECTRIC GENERATORS
CAPOT D'EXTRÉMITÉ DE ROTOR POUR GÉNÉRATEURS ÉLECTRIQUES

(30) Priorität: 31.03.2014 DE 102014206010
(43) Veröffentlichungstag der Anmeldung: 24.08.2016
(73) Patentinhaber: Siemens Aktiengesellschaft, 80333 München (DE)
(72) Erfinder: GRÖPPEL, Peter, 91052 Erlangen (DE); JOHANNES, Martin, 90763 Fürth (DE); ROHR, Claus, 68723 Schwetzingen (DE); SEIDEL, Christian, 90571 Schwaig (DE)
(86) Internationale Anmeldenummer: PCT/EP2015/055651
(87) Internationale Veröffentlichungsnummer: WO 2015/150077

(56) Entgegenhaltungen:
- WO-A2-2012/061856
- DE-A1-102010 032 827
- DE-A1-102011 077 861
- US-A- 5 928 736

## Beschreibung

Die Erfindung betrifft eine Läuferkappe für einen elektrischen Generator, sowie ein Herstellungsverfahren dazu. Die Erfindung betrifft ferner einen solchen Generator. Die Erfindung ist insbesondere vorteilhaft anwendbar bei schnelllaufenden Turbogeneratoren.

Elektrische Energie wird heute fast ausschließlich in rotierenden Stromerzeugern so genannten Generatoren erzeugt. Der weitaus größte Teil des in Generatoren erzeugten Stroms stammt aus Turbogeneratoren. Diese laufen mit 3.000 bis 3600 Umdrehungen pro Minute. Das rotierende magnetische Feld wird durch Wicklungen mit wechselnder Polarität erzeugt, die durch Gleichstrom erregt werden. Die Wicklungen treten aus den Längsnuten des Rotors an den Ballenenden aus und bilden den Wicklungskopf, der gegen die Fliehkraft gesichert wird. Somit wird ein Herausfliegen der am Ende zusammenkommenden Kupferwicklungen (Läuferwickelkopf) durch Fliehkräfte verhindert.

Die Läuferkappe ist in der Regel im Gegensatz zum Rotor selbst aus einem hochlegierten nichtmagnetisierbaren Stahl und bildet mit den Nutenkeilen an der Oberfläche des Rotors einen elektrisch leitfähigen Käfig, welcher als Dämpferwicklung bezeichnet wird. Die Dämpferwicklung dient dazu, Stoßbelastungen (Polradpendelungen) und die Erwärmung des Läufers bei Schieflast zu reduzieren. In dem aus massivem Stahl geschmiedeten Rotor treten bei symmetrischer Belastung keine Wechselfelder und somit auch keine Wirbelströme auf. Durch eine Schieflast kommt es allerdings zu einem magnetischen Drehfeld im Stahlkern des Rotors, welches zu Wirbelströmen und zu einer unzulässigen Erwärmung und im Extremfall zur Zerstörung des Turbogenerators führen kann. Dies gilt es für die projektierte Lebensdauer auszuschließen. Diese Funktionen übernehmen die Läuferkappen. Sie sind die am höchsten beanspruchten Bauteile des Turbogenerators. Die Läuferkappen werden in den meisten Fällen fliegend auf die Ballenenden aufgeschrumpft und z.B. mit einer Art Bajonettverschluss gegen Dreh- und Axialbewegungen gesichert. An der dem Ballen abgewandten Seite ist in vielen Fällen ein Stützring in die Läuferkappe eingeschrumpft, der die in Längsrichtung wirkenden Kräfte der Wicklungsköpfe aufnimmt.

Die Entwicklung immer größerer Leistungseinheiten führt zu einer wachsenden Beanspruchung der Läuferkappen. Es werden daher höchste Anforderungen an die konstruktive und werkstoffliche Gestaltung der Läuferkappen gestellt. Auch ist es erforderlich mit steigender Leistung, insbesondere bei Turbogeneratoren, die Kühlung zu intensivieren. Es ist bekannt, dass bei Generatoren im Bereich bis ca. 300 MvA überwiegend Luft als Kühlmedium verwendet wird. Bei größeren Leistungen wird als Kühlfluid auch Wasserstoff verwendet. Das Kühlfluid und die Kühlungsart haben Auswirkungen auf die konstruktive Ausgestaltung des Generators, insbesondere auch der Spulen im Ständer und im Läufer. Bei den Kühlungsarten unterscheidet man zwischen indirekten und direkten Leiterkühlungen. Ferner ist es bekannt, Generatoren durch Saug- oder Druckbelüftung zu kühlen. Bei einer Saugbelüftung wird das Kühlfluid vom Hauptlüfter in Kanälen zum Kühler hingeleitet. Von dort strömt das Kühlmedium ohne Aufwärmung durch Lüfterverluste und Kompression zu den zu kühlenden Maschinenteilen, insbesondere auch zu den Läuferspulen. Zur Strömungserzeugung werden sowohl bei einer Druckbelüftung als auch bei einer Saugbelüftung im Falle der Luftkühlung aus Kostengründen in der Regel Axiallüfter verwendet. Bei Wasserstoffkühlungen kommen auch Radiallüfter und mehrstufige Axiallüfter zum Einsatz.

Bislang werden die Läuferkappen in der Regel aus Metall oder einer Legierung gefertigt.

Aus der EP 1628382 B1 ist beispielsweise eine Konstruktion bekannt, bei der die Läuferkappen oder Kappenringe (diese beiden Begriffe werden vorliegend synonym verwendet) aus legiertem Metall gemacht sind. Dabei sind zwar optimale mechanische Eigenschaften realisiert, allerdings sind sowohl Produktionszeiten als auch Produktionskosten sehr hoch und es gibt kein Konzept für eine Kühlung.

Aus der DE 10 2010 032827 A1 ist eine Läuferkappe eingangs erwähnter Art bekannt, die komplett aus Faserverbundkunststoff ist und radiale Kühlkanäle aufweist.

Die WO 2012061856 A2 offenbart eine aus mehreren Ringen bestehende Wickelkopfabstützung aus faserverstärktem Kunststoff mit Lüftungsschlitzen in Umfangsrichtung, die der mehrteiligen Struktur entsprechen.

Es ist die Aufgabe der vorliegenden Erfindung, eine Läuferkappe für einen elektrischen Generator bereitzustellen, durch welchen die Nachteile des Standes der Technik, insbesondere im Bereich der Kühlung des Rotorwickelkopfes, zumindest teilweise überwindet werden.

Diese Aufgabe wird gemäß den Merkmalen der unabhängigen Ansprüche gelöst. Bevorzugte Ausführungsformen sind insbesondere den abhängigen Ansprüchen entnehmbar.

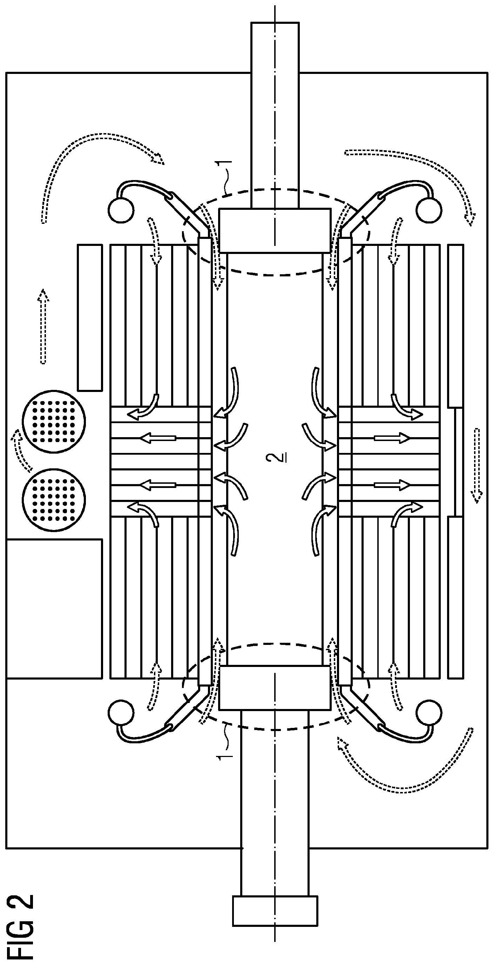

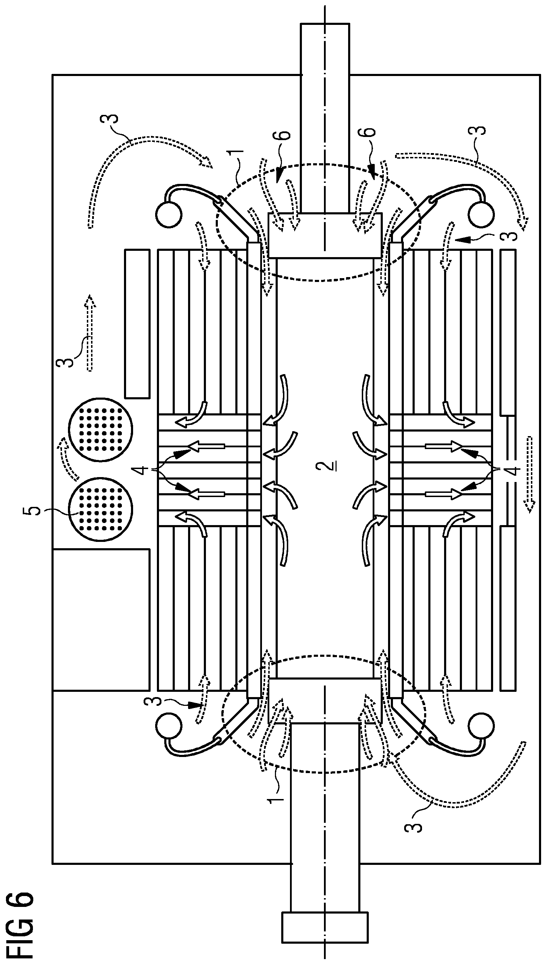

Allgemeine Erkenntnis der Erfindung ist, dass die Realisierung von Läuferkappen aus Metall und/oder legiertem Metall mit maximalen mechanischen Eigenschaften nur in geschlossener Form möglich ist. Gleichzeitig bewirkt aber die geschlossene Ausführung der Läuferkappen an beiden Seiten des Rotors eine deutliche Einschränkung hinsichtlich der Kühlung der innenliegenden Leiter insbesondere im Bereich des Wickelkopfes, (vergleiche hierzu die Figuren 2 und 6). Eine effektive Kühlung mit Kühlfluiden wie Luft oder Wasserstoff würde idealerweise in axialer Richtung erfolgen und in Form eines kalten Fluidstromes auf der einen Seite eingeströmt und auf der gegenüberliegenden Seite abgeführt werden. Diese effektive Kühlung wird gemäß der Erfindung durch eine Läuferkappe, die aus Faserverstärktem Kunststoff, zumindest teilweise, gemacht ist und im Bereich des Faserverstärkten Kunststoffes, zumindest teilweise, Kühlfluiddurchlässe aufweist, erreicht.

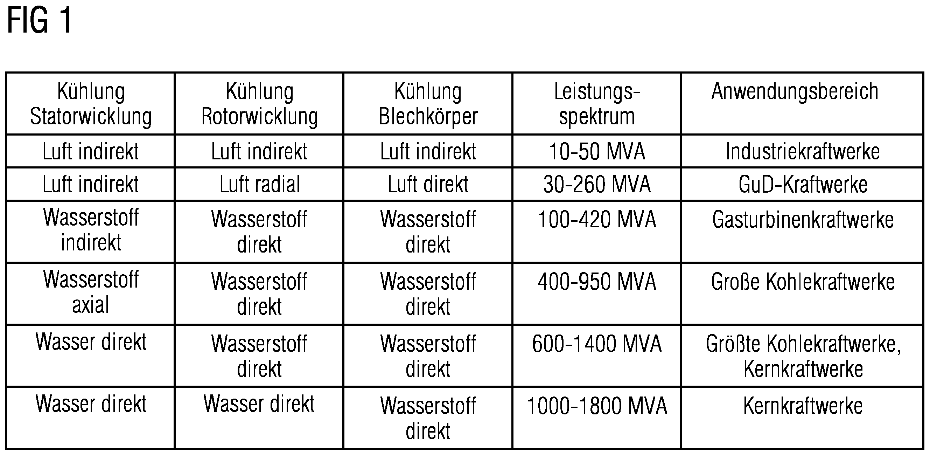

Aufgrund der mechanischen Beanspruchung der Läuferkappe ist es bei der Ausführung in Form von Metall und/oder legiertem Metall nur eingeschränkt möglich, Lüftungsschlitze, Lüftungslöcher und/oder andersartige Fluiddurchlässe zu realisieren, da diese zu großen mechanischen Spannungen und verminderter Zuverlässigkeit und Lebensdauer der Läuferkappe führen würden. Vor diesem Hintergrund ist Stand der Technik, dass die beschränkte Kühlung von Rotorwicklungen zu einer Leistungsbeschränkung bei modernen Turbogeneratoren führt. Dies gilt auch unter Berücksichtigung aufwändiger Kühlungsvorrichtungen wie sie z.B. in der DE 19548321 beschrieben wird. In Figur 1 ist eine Tabelle gezeigt, die das Leistungsspektrum aktueller Turbogeneratoren auflistet.

Figur 1 zeigt eine Tabelle, die Turbogeneratoren, nach Leistungsspektrum sortiert, auflistet und die deren vorwiegend angewendete Kühlsysteme angibt. Die vorliegende Erfindung zielt hierbei insbesondere auf Generatoren mit - zumindest gemäß dieser Liste - Luft und/oder Wasserstoff gekühlten Rotoren bis zu einer Leistung von ca. 1400MVA ab.

Figur 2 zeigt das bevorzugte Kühlkonzept derartiger Generatoren, wobei die Läuferkappen 1 und der Wasserstoffgekühlte Rotor 2. Figur 2 gibt den Stand der Technik wieder und Figur 6 dazu die Verbesserung durch die Erfindung. Figur 6 zeigt die gleiche Ansicht wie Figur 2, wobei die Fluidströme, die durch einen Einsatz einer Läuferkappe gemäß der Erfindung im Bereich der Läuferkappe möglich werden, in Figur 6 gezeigt sind.

Deutlich ist in Figur 2 eine gute axiale Kühlung durch ein Einbringen kalten Fluides, dargestellt durch die Pfeile 3, die aus den Fluiddurchlässen 2 zunächst kalt in das System einströmen, den Rotor 2 dabei axial kühlen und als erwärmte und verbrauchte Fluidströme 4, die das System wieder verlassen, dargestellt sind. Es ist klar, dass sich die Fluidströme 3 unter Energieaufnahme zu erwärmten Fluidströmen 4 wandeln und aus dem System wieder entfernt werden. Deutlich ist aber auch, dass im Bereich 1 der Läuferkappen - die einfach durch ellipsoides Einkreisen markiert sind - aufgrund deren geschlossenen Aufbaus eine Kühlung des darunter liegenden Rotorwickelkopfes zumindest nicht über Fluidströme realisiert ist. Dort findet gemäß dem Stand der Technik keine Strömung statt. Figur 6 zeigt die gleiche Ansicht gemäß der Erfindung mit den durch den Einsatz erfindungsgemäßer Läuferkappen erweiterten Strömungen im Bereich 1 der Läuferkappen.

Durch den Einsatz von Kohlefaserverstärkten Kunststoffen als Ersatz der legierten Stähle in Läuferkappen, wie in der DE 10 2011077861.6 beschrieben, wird das Potential gezeigt, das in der Verwendung von Faserverstärkten Kunststoffen an dieser Stelle liegt.

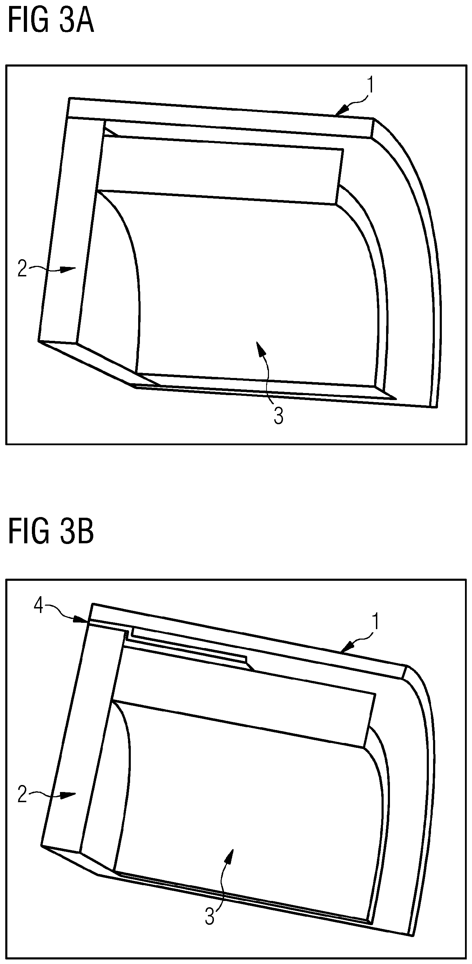

Figur 3 zeigt eine herkömmliche, metallisch gefertigte Läuferkappe im Vergleich mit einer Läuferkappe aus Faserverstärktem Kunststoff.

Die Figur 3 zeigt in Schrägansicht einen Teil einer Läuferkappe 1 eines Turbogenerators in einem Viertelsektorschnitt um eine Längsachse im Bereich der Läuferkappe 1. Die Läuferkappe 1 sitzt im Bereich ihrer Stirnseite auf einem Rotorende 2 auf und umgibt mantelförmig einen Rotorwickelkopf 3.

Figur 3a zeigt dabei den Stand der Technik mit einer metallischen Läuferkappe 1, die beispielsweise aus Stahl gefertigt ist. Zu erkennen ist auch das Rotorende 2, sowie der Rotorwickelkopf 3.

Die gleiche Ansicht ist in Figur 3b zu erkennen, jedoch ist hier eine Läuferkappe 1 aus Faserverstärktem Kunststoff, beispielsweise UD-CFK gezeigt. Zur Ausführung dieser Läuferkappen aus Faserverstärktem Kunststoff wird vollinhaltlich auf die DE 102011077861.6 verwiesen.

Figur 3b zeigt auch zwischen der Läuferkappe 1 aus Faserverstärktem Kunststoff und dem Rotorwickelkopf 3 beziehungsweise dem Rotorende 2, das metallische Inlay, also den Einlegering 4.

Die Aufgabe wird durch eine Kühlung im Bereich der Läuferkappe gemäß der Erfindung so gelöst, dass die Läuferkappe zumindest teilweise aus Faserverstärktem Kunststoff besteht und im Bereich des Faserverstärkten Kunststoffes Lüftungsschlitze, Lüftungslöcher und/oder sonstige Kühlfluiddurchlässe aufweist.

Ein Kühlfluiddurchlass ist hier eine Lüftungsöffnung in der Läuferkappe, insbesondere ein Gasdurchlass, beispielsweise realisiert als Lüftungsschlitz, als Lüftungsloch, als Luft- und/oder Gasein- und auslass, oder einfach als Öffnung beziehungsweise Loch, das durch den Faserverstärkten Kunststoff geht. Andererseits kann als Kühlfluid auch ein beliebiges anderes Medium als Gas, das an der Stelle zur Wärmeaufnahme geeignet ist, eingesetzt werden.

Erfindungsgemäß ist die Läuferkappe komplett aus Faserverstärktem Kunststoff. Dabei weist die Läuferkappe jeweils in der Hauptbelastungsrichtung Lüftungsschlitze auf. Insbesondere vorteilhaft hat sich die Ausführungsform erwiesen, die einen Einlegering umfasst, und dabei insbesondere die Variante, in der dieser Einlegering an seiner an den Faserverstärkten Kunststoff anliegenden Seite mit einer hochgradig leitfähigen Schicht, bevorzugt aus Silber, versehen ist.

Der Faserverstärkte Kunststoff kann auch als ein Kunststoffmatrix/Faser-Kompositmaterial bezeichnet werden.

Die Fasern können insbesondere als (lose) unidirektionale Fasern, als Fasergewebe und/oder als Fasergelege vorliegen oder bereitgestellt worden sein.

Es ist noch eine Ausgestaltung, dass die Fasern Kohlefasern aufweisen oder sind. Kohlefasern weisen den Vorteil auf, dass sie hochfeste Matrix/Faser-Kompositmaterialien ermöglichen, preiswert sind, weit verfügbar sind, sich bei der Herstellung einfach handhaben lassen und zudem elektrisch leitfähig sind.

Es ist noch eine weitere Ausgestaltung, dass die Fasern Keramikfasern aufweisen. Keramikfasern weisen den Vorteil einer besonders hohen Zugfestigkeit und Dehnbarkeit als auch Hochtemperaturbeständigkeit auf.

Die Keramikfasern können insbesondere oxidische Keramikfasern sein, insbesondere Aluminiumoxid-Fasern oder Siliziumdioxid-Fasern. Die Keramikfasern können alternativ oder zusätzlich nichtoxidische Keramikfasern sein, insbesondere Siliziumkarbid-Fasern.

Es ist noch eine weitere Ausgestaltung, dass die Fasern Borfasern aufweisen. Diese weisen eine extrem hohe Festigkeit und Steifigkeit auf.

Es ist noch eine Weiterbildung, dass die Fasern Aramidfasern aufweisen. Aramidfasern zeichnen sich durch eine sehr hohe Festigkeit, eine hohe Schlagzähigkeit, eine hohe Bruchdehnung, eine gute Schwingungsdämpfung sowie eine hohe Beständigkeit gegenüber Säuren und Laugen aus. Sie sind darüber hinaus sehr hitze- und feuerbeständig.

Es ist ferner eine Ausgestaltung, dass die Fasern in einer Kunststoffmatrix aus Harz, insbesondere Epoxidharz, eingebettet sind. Epoxidharz ist als Matrixmaterial für Fasern gut bekannt und beherrschbar. Epoxidharz ist ferner von hoher Festigkeit und chemischer Beständigkeit. Jedoch sind auch andere Kunststoff, insbesondere duroplastische Kunststoffe, einsetzbar.

Erfindungsgemäß ist die Läuferkappe vollständig aus dem Faserverstärkten Kunststoff hergestellt. Es ist auch eine Ausgestaltung, dass die Läuferkappe an ihrer Innenseite einen als Auflagefläche vorgesehenen Einlegering ("Inlay") aufweist. Diese kann metallisch gefertigt und/oder mit einer Metallschicht, insbesondere auch mit einer Silberschicht, beschichtet sein. Nach einer bevorzugten Ausführungsform hat der Einlegering an seiner an dem Faserverstärkten Kunststoff anliegenden Seite eine elektrisch hochgradig leitfähige Beschichtung, insbesondere eine Silberbeschichtung.

Erfindungsgemäß weisen die Fasern eine Vorzugsrichtung auf. So kann eine besonders hohe Festigkeit in Richtung besonders hoher Beanspruchungen erreicht werden, was eine Wahrscheinlichkeit eines Versagenseintritts, z.B. aufgrund einer Rissbildung, vermindert und eine Lebensdauer erhöht. Diese Vorzugsrichtung nennt man dann beispielsweise Hauptbelastungsrichtung.

Erfindungsgemäß sind die Lüftungsschlitze in der Hauptbelastungsrichtung angeordnet. Es ist eine Ausgestaltung, dass die Vorzugsrichtung insbesondere zumindest im Wesentlichen eine Umfangsrichtung der Läuferkappe umfasst. So können insbesondere mechanische Beanspruchungen, insbesondere Zugspannungen, welche auf einer durch Fliehkräfte verursachten Umfangsausdehnung beruhen, berücksichtigt werden. Unter einer Umfangsrichtung kann insbesondere eine Richtung eines sich ändernden Azimutwinkels in Bezug auf eine Drehachse oder Längsachse der Läuferkappe verstanden werden.

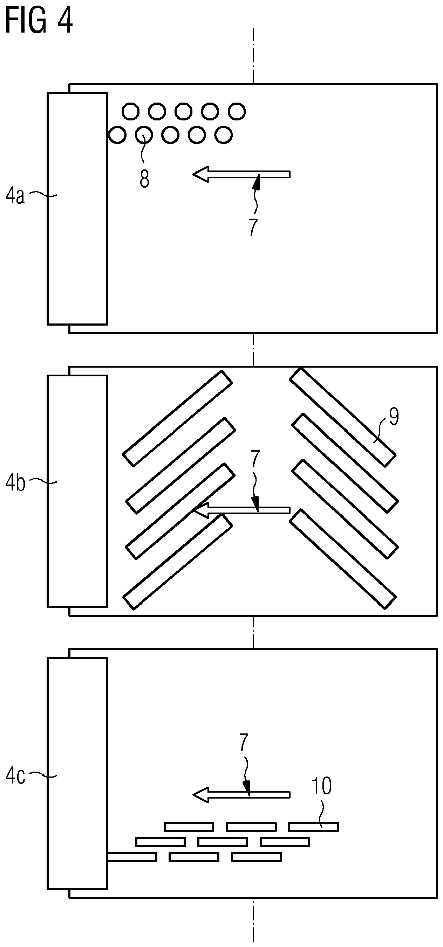

Figur 4 zeigt drei beispielhafte Ausführungsformen von Kühlfluiddurchlässen 4a, 4b und 4c, wie sie beispielsweise in dem Faserverstärkten Kunststoff der Läuferkappe realisiert sind.

Im Kühlfluidurchlass 4a ist dabei eine erste nicht erfindungsgemäße Ausführungsform realisiert, bei der die Lüftungslöcher 8 als Kühlfluiddurchlass dienen, wie durch den Pfeil 7, der die Vorzugsrichtung innerhalb des Faserverstärkten Kunststoffes repräsentiert, zeigt. Der nicht erfindungsgemäße Kühlfluidurchlass 4b zeigt wieder die Lage und/oder Vorzugs- oder Hauptbelastungsrichtung des Faserverstärkten Kunststoffes und daneben die Lüftungsschlitze 9, die schräg zur Hauptbelastungsrichtung 7 verlaufen. Schließlich zeigt der erfindungsgemäße Kühlfluidurchlass 4c eine weitere Ausführungsform mit Lüftungsschlitzen 10, die in Hauptbelastungs- oder Vorzugsrichtung 7 des Faserverstärkten Kunststoffes verlaufen.

Darüber hinaus gibt es beliebige weitere Varianten von Kühlfluiddurchlässen im Sinne der vorliegenden Erfindung. Bevorzugt liegen sie in radialer Richtung, von innen nach außen, damit Fluidaustausch, insbesondere Gasaustausch, gewährleistet ist. Die Kühlfluiddurchlässe können dabei direkt in radialer Richtung durch die Läuferkappe oder auch, zur Verbesserung der Anströmung, schräg durch die Dickenrichtung der Läuferkappe führen.

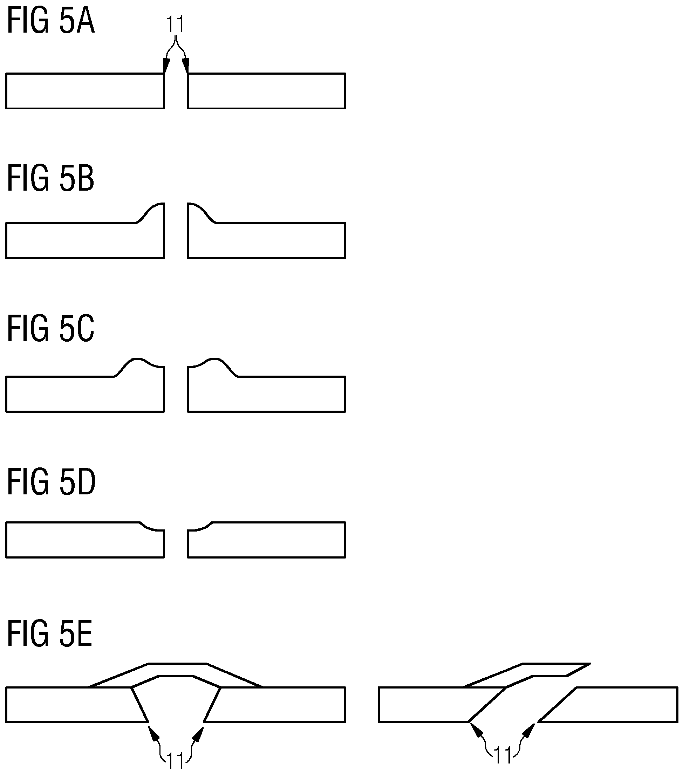

Die Kühlfluiddurchlässe können entsprechend der in Figur 5 angegebenen Varianten neben einer einfachen, z.B. wie in 5a) der Figur 5 dargestellten Variante, an den Kanten 11 der Kühlfluiddurchlässe auch strömungsbeeinflussend oder sonst wie gestaltet sein. Einige Arten der Gestaltung der Kanten 11 der Kühlfluiddurchlässe sind beispielhaft in Figur 5 dargestellt.

Die Kanten 11, ebenso wie die Kühlfluiddurchlässe 8, 9 und 10 können innerhalb einer Läuferkappe unterschiedlich oder gleich gestaltet sein und in Teilbereichen einheitlich oder verschieden kombiniert, je nach Ausführungsform. Die äußeren und inneren Kanten 11 eines Kühlfluiddurchlasses 8, 9 und/oder 10 der Läuferkappe 1 können dabei gleich oder verschieden ausgestaltet sein. Ebenso können sich gegenüberliegende Kanten 11 der äußeren oder inneren Seite eines Kühlfluiddurchlasses voneinander unterscheiden oder auch gleich sein.

Figur 5 zeigt ein paar beispielhafte Ausführungsformen zur Gestaltung der Kanten 11 der Kühlfluiddurchlässe in Läuferkappen gemäß der Erfindung.

Figur 5a zeigt die herkömmliche ganz einfache Kantengestaltung.
Figur 5b zeigt die Gestaltung der Kanten 11 mit so genannten Höckerprofilen.
Figur 5c zeigt eine Weiterbildung der Gestaltung der Kanten 11 mit so genannten Höckerprofilen mit Golfballdelle am Einlass und
Figur 5d zeigt eine Gestaltung der Kanten 11 im so genannten Golfballprofil.

Figur 5e zeigt eine weitere Ausführungsform der Kühlfluiddurchlässe mit abgeschrägten Kanten 11. Diese zeigt eine Struktur ähnlich der einer Reibe/raspel mit Querschnitt e), welche bei axialer Anströmung das Kühlfluid, wie beispielsweise die Kaltluft mit sanfter Umleitung radial ins Innere der Läuferkappe einleiten.

Die Läuferkappe kann bezüglich ihres Faserverstärkten Kunststoffs beispielsweise mittels einer Filament-Umwicklung ("Filament-Winding"), mittels Spritzpressens (auch als "Resin Transfer Molding"; RTM bezeichnet) und/oder mittels einer Prepreg-Technologie hergestellt werden. Diese Herstellungsverfahren ermöglichen eine flexible und effiziente Herstellung durch Lamination.

Zur Herstellung der Kühlfluiddurchlässe können folgende Faserverbundgerechten und Faserverbundspezifischen Lösungen eingesetzt werden.

Einbringen der Kühlfluiddurchlässe nach der Läuferkappenherstellung: Dabei kann die polymere Faserverbund-Läuferkappe nach der Herstellung spanend nachbearbeitet werden. Durch Bohren und/oder Fräsen können die oben genannten Geometrien an Kühlfluiddurchlässen axial oder radial in die Läuferkappe eingebracht werden.

Besonders bevorzugt ist jedoch der Herstellungsansatz, bei dem während der Lamination des Faserverbundkunststoffes durch Einsatz von Inserts, beispielsweise von zylindrischen Inserts, in axialer Richtung die Kühlfluiddurchlässe gestaltet werden. Diese können aus Metall sowie aus CFK, GFK oder anderen Kunststoffen oder Composites bestehen. Weiterhin ist ein Speichenrad denkbar, welches einen inneren und einen äußeren Ring umfasst, in welchen die Fasern vorzugsweise in Umfangsrichtung liegen. Zwischen diesen Ringen werden CFK-Streben oder Speichen eingebracht, die die beiden Ringe gegen Flieh- und/oder Axialkraft verwindungssteif miteinander verbindet. Zur Realisierung des Luftstromes durch die Dickenrichtung der Kappe (radiale Richtung) sind zwei CFK-Ringe möglich, die mit einer Lücke im Kappenumfang realisiert werden. Diese Lücke kann zur Verbindung beider Ringe mit axialen "Speichen" versehen werden.

Als Materialien für die Realisierung der CFK-Läuferkappe bieten sich für den strukturmechanischen Grundkörper klassische Kohlefasern auf Basis von Polyacrylnitril (PAN) an. Für eine erhöhte Steifigkeit und gleichzeitig gesteigerte Wärmeleitfähigkeit der CFK-Strukturen können teilweise oder ganz so genannte Hochmodulfasern eingesetzt werden, die pechbasierend hergestellt werden. Weiterhin ist zur Steigerung der Wärmeleitfähigkeit des CFK eine Partikelfüllung der Polymermatrix mit Graphit, Kohlenstoff-Kurzfasern, Metallpartikeln auf Basis von Aluminium, Kupfer und/oder Silber sowie beliebige Legierungen daraus und/oder aus wärmeleitfähigen Metallverbindungen wie Nitriden, z.B. Bornitrid, oder Oxiden möglich.

Es ist eine Weiterbildung, dass die mindestens eine Vorzugsrichtung genau eine Vorzugsrichtung umfasst, die Fasern also zumindest lokal unidirektional ausgerichtet sind. Dadurch kann eine besonders hohe Festigkeit in dieser Vorzugsrichtung erreicht werden.

Figur 6 zeigt die verbesserte Kühlung eines Rotorwicklungskopfes bei der Verwendung der Läuferkappen nach der Erfindung. Im Vergleich zu Figur 2 wird hier ersichtlich, dass weitere Kühlfluidströme 6 zur Kühlung des Rotorwickelkopfes im Bereich 1 der Läuferkappen durch die Läuferkappen hindurch laufen.

Obwohl die Erfindung im Detail näher illustriert und beschrieben wurde, so ist die Erfindung nicht darauf eingeschränkt und andere Variationen können vom Fachmann hieraus abgeleitet werden, ohne den in Anspruch 1 definierten Schutzumfang der Erfindung zu verlassen.

Die Erfindung betrifft eine Läuferkappe für einen elektrischen Generator, sowie ein Herstellungsverfahren dazu. Die Erfindung betrifft ferner einen solchen Generator. Die Erfindung ist insbesondere vorteilhaft anwendbar bei schnelllaufenden Turbogeneratoren. Dabei besteht die durch Anspruch 1 definierte Läuferkappe (1) aus Faserverstärktem Kunststoff. Im Bereich des Faserverstärkten Kunststoffes weist die Läuferkappe (1) Lüftungsschlitze (10) insbesondere bevorzugt in axialer Richtung, also von der an den Rotorwickelkopf (3) angrenzenden inneren Seite der Läuferkappe (1) nach außen, auf.

## Patentansprüche

1. Läuferkappe (1) für einen elektrischen Generator, **dadurch gekennzeichnet, dass** die Läuferkappe (1) vollständig aus Faserverstärktem Kunststoff hergestellt ist, wobei die Fasern eine Vorzugsrichtung (7) aufweisen, **dadurch gekennzeichnet, dass** Lüftungsschlitze (10) vorgesehen sind, die in der Hauptbelastungsrichtung der Läuferkappe (1) und somit in der Vorzugsrichtung (7) angeordnet sind.

2. Läuferkappe (1) nach Anspruch 1, wobei die Läuferkappe an der Innenseite als Anlagefläche ein Einlegering hat.

3. Läuferkappe nach einem der vorhergehenden Ansprüche, wobei die Fasern Kohlefasern aufweisen.

4. Läuferkappe nach einem der vorhergehenden Ansprüche, wobei die Fasern Keramikfasern, insbesondere Aluminiumoxid-Fasern aufweisen.

5. Läuferkappe nach einem der vorhergehenden Ansprüche, wobei die Fasern Borfasern aufweisen.

6. Läuferkappe nach einem der vorhergehenden Ansprüche, wobei die Fasern in einer Matrix aus Harz, insbesondere Epoxidharz, eingebettet sind.

7. Verfahren zur Herstellung einer Läuferkappe nach Anspruch 1, durch Lamination, bei dem während der Lamination des Faserverbundkunststoffes durch Einsatz von Inserts, insbesondere von zylindrischen Inserts, in axialer Richtung die Kühlfluiddurchlässe gestaltet werden.

8. Elektrischer Generator, insbesondere Turbogenerator, mit mindestens einer Läuferkappe (1), **dadurch gekennzeichnet, dass** die mindestens eine Läuferkappe (1) eine Läuferkappe (1) nach einem der Ansprüche 1 bis 6 ist.

## Claims

1. Rotor cap (1) for an electric generator, **characterized in that** the rotor cap (1) is produced entirely from fibre-reinforced plastic, wherein the fibres have a preferred direction (7), **characterized in that** ventilation slots (10) are provided, which are arranged in the main direction of load of the rotor cap (1) and thus in the preferred direction (7).

2. Rotor cap (1) according to Claim 1, wherein the rotor cap has a spacer ring as a bearing surface on its inner side

3. Rotor cap according to either of the preceding claims, wherein the fibres comprise carbon fibres.

4. Rotor cap according to one of the preceding claims, wherein the fibres comprise ceramic fibres, in particular aluminium oxide fibres.

5. Rotor cap according to one of the preceding claims, wherein the fibres comprise boron fibres.

6. Rotor cap according to one of the preceding claims, wherein the fibres are embedded in a matrix of resin, in particular epoxy resin.

7. Method for producing a rotor cap according to Claim 1 by lamination, in which, during the lamination of the fibre composite plastic, the cooling fluid passages are formed in the axial direction by the use of inserts, in particular of cylindrical inserts.

8. Electric generator, in particular turbogenerator, having at least one rotor cap (1), **characterized in that** the at least one rotor cap (1) is a rotor cap (1) according to one of Claims 1 to 6.

## Revendications

1. Capot d'extrémité (1) d'un générateur électrique, **caractérisé en ce que** le capot d'extrémité (1) est entièrement réalisé en matière plastique renforcée par des fibres, les fibres ayant une direction préférentielle (7), **caractérisé en ce que** des fentes d'aération (10) sont prévues qui sont disposées dans la direction principale de sollicitation du capot d'extrémité (1) et donc dans la direction préférentielle (7).

2. Capot d'extrémité (1) selon la revendication 1, dans lequel le capot d'extrémité comporte un anneau d'insertion à l'intérieur qui sert de surface d'appui.

3. Capot d'extrémité selon l'une des revendications précédentes, dans lequel les fibres comportent des fibres de carbone.

4. Capot d'extrémité selon l'une des revendications précédentes, dans lequel les fibres comportent des fibres céramiques, notamment des fibres d'alumine.

5. Capot d'extrémité selon l'une des revendications précédentes, dans lequel les fibres comportent des fibres de bore.

6. Capot d'extrémité selon l'une des revendications précédentes, dans lequel les fibres sont noyées dans une matrice de résine, notamment de résine époxy.

7. Procédé de fabrication par stratification d'un capot d'extrémité selon la revendication 1, dans lequel, pendant la stratification de la matière plastique composite renforcée par des fibres, les passages de fluide de refroidissement sont ménagés en direction axiale grâce à la mise en œuvre d'inserts, en particulier d'inserts cylindriques.

8. Générateur électrique, notamment turbogénérateur, comportant au moins un capot d'extrémité (1), **caractérisé en ce que** l'au moins un capot d'extrémité (1) est un capot d'extrémité (1) selon l'une des revendications 1 à 6.
